(19) Europäisches Patentamt
European Patent Office
Office européen des brevets

(11) EP 3 214 578 A1

(12) EUROPEAN PATENT APPLICATION

(43) Date of publication:
06.09.2017 Bulletin 2017/36

(51) Int Cl.:
G06K 9/20 (2006.01)　　　G06K 9/62 (2006.01)

(21) Application number: 17156447.9

(22) Date of filing: 16.02.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 02.03.2016 JP 2016040403

(71) Applicant: Kabushiki Kaisha Toshiba
Tokyo
105-8001 (JP)

(72) Inventors:
• MATSUKI, Hiroshi
Minato-ku, Tokyo 105-8001 (JP)
• NATORI, Naotake
Minato-ku, Tokyo 105-8001 (JP)
• HASEBE, Mitsutake
Minato-ku, Tokyo 105-8001 (JP)

(74) Representative: Horn Kleimann Waitzhofer
Patentanwälte PartG mbB
Ganghoferstrasse 29a
80339 München (DE)

(54) SHEET PROCESSING APPARATUS AND PROGRAM

(57) According to one embodiment, a sheet processing apparatus includes: an image acquiring device (110) configured to acquire a sheet image that is an image on a sheet (P); a setting portion (120) configured to set a reference area (55) in the sheet image acquired by the image acquiring device (110), wherein the setting portion (120) repeats moving the reference area (55) from a starting position to an end position in a first direction by a first moving width (Lx), and, upon the reference area (55) reaching the end position, moving the reference area (55) in a second direction intersecting the first direction by a second moving width (Ly); a degree of similarity calculating portion (130) configured to extract a feature from an image in the reference area (55) set by the setting portion (120), and calculate a degree of similarity between the extracted feature and a typical sheet pattern; a moving width calculating portion (140) configured to calculate the first moving width (Lx) and/or the second moving width (Ly) based on the degree of similarity calculated by the degree of similarity calculating portion (130); a position specifying portion (150) configured to specify a position at which the typical pattern of sheets is present in the sheet image based on a plurality of the degrees of similarity calculated by the degree of similarity calculating portion (130); and a kind of sheet discriminating portion (160) configured to discriminate a kind of the sheet (P) based on the sheet image at the position specified by the position specifying portion (150).

FIG. 3

**Description**

CROSS-REFERENCE TO RELATED APPLICATION

This application is based upon and claims the benefit of priority from Japanese Patent Application No. 2016-040403, filed on March 2, 2016; the entire contents of which are incorporated herein by reference.

FIELD

An embodiment described herein relates generally to sheet processing apparatuses and programs.

BACKGROUND

In recent years, a large amount of sheets (sheet-shaped articles) such as banknotes are handled on a daily basis at banks, large-scale retailers, and the like. These sheets are sorted by kind of the sheets by a sheet processing apparatus. Conventional sheet processing apparatuses discriminate the kinds of sheets by reading images on the sheets and detecting a typical sheet pattern in the read images.

In conventional sheet processing apparatuses, however, many calculations need to be performed to accurately specify the position at which the typical sheet pattern is present. For this reason, processing for determining the kind of the sheets takes time in some cases.

BRIEF DESCRIPTION OF THE DRAWINGS

FIG. 1 is a cross-sectional view of a sheet processing system according to an embodiment;
FIG. 2 is a block diagram showing a control configuration of the sheet processing system according to the embodiment;
FIG. 3 is a block diagram showing a control configuration of a banknote inspection device 100 according to the embodiment;
FIG. 4 is a diagram showing an exemplary starting position of a reference area according to the embodiment;
FIG. 5 is a diagram showing an example of a state in which the reference area has been moved in an X direction according to the embodiment;
FIG. 6 is a diagram showing an example of a state in which the reference area has reached an end position of a sheet image in the X direction according to the embodiment;
FIG. 7 is a diagram showing an example of a state in which the reference area has been moved in a Y direction according to the embodiment;
FIG. 8 is a diagram showing an example of a state in which the reference area has reached a position at which a maximum degree of similarity S is obtained according to the embodiment;
FIG. 9 is a diagram showing an example of a state in which the reference area has reached a final position according to the embodiment;
FIG. 10 is a diagram showing an exemplary distribution of degrees of similarity in the sheet image according to the embodiment;
FIG. 11 is a flowchart showing processing for determining a kind of a sheet according to the embodiment; and
FIG. 12 is a flowchart showing moving width calculating processing in step S16 shown in FIG. 11.

DETAILED DESCRIPTION

A sheet processing apparatus and a program according to an embodiment will be hereinafter described with reference to the drawings.

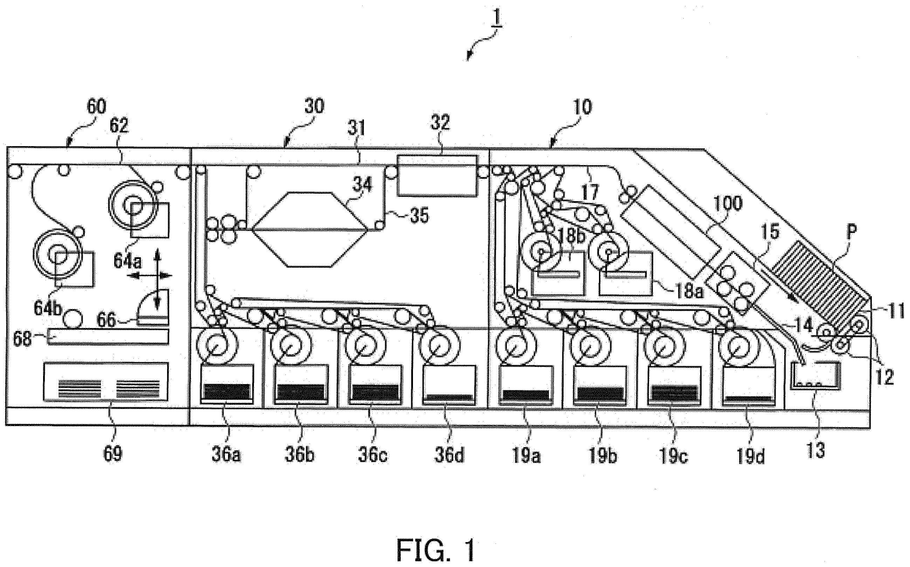

FIG. 1 is a cross-sectional view of a sheet processing system according to thus embodiment. As shown in FIG. 1, a sheet processing system 1 that processes sheets P includes a sheet processing apparatus 10, an alignment device 30, and a sealing device 60, for example. The sheet processing apparatus 10, the alignment device 30, and the sealing device 60 are lined up in this order. The sheet processing apparatus 10, the alignment device 30, and the sealing device 60 are electrically and mechanically connected to one another. In the following description, banknotes will be taken as an example of the sheets P.

First, processing for sorting the banknotes P will be described. As shown in FIG. 1, the sheet processing apparatus 10 has a supplier 11, a roller 12, and a conveying path 14. A plurality of banknotes P are placed on the supplier 11. The roller 12 sends out the banknotes P one by one from the supplier 11. The banknotes P that have been sent out by the roller 12 are conveyed along the conveying path 14. The conveying path 14 is provided with a plurality of pairs of endless conveyor belts (not shown) on respective sides of the conveying path 14. The banknotes P that have been sent out by the roller 12 are conveyed while being held by the conveyor belts.

The conveying path 14 is inclined toward a banknote inspection device 100 from a position after the roller 12. Thus, when a foreign material such as a clip, a coin, or a pin is sent out to the conveying path 14 together with the banknotes P from the supplier 11, the foreign material falls toward the lowermost part of the conveying path 14 due to the gravity. With this configuration, it is possible to prevent foreign material from entering the banknote inspection device 100, and prevent the banknote inspection device 100 from being damaged by the foreign material. The banknote inspection device 100 may also be referred to as a "valuable security inspection device" and is an example of an "image acquiring portion".

A foreign material collector 13 is provided at the lowermost part of the conveying path 14. The foreign material collector 13 is constituted by a collecting box that can be pulled out from the apparatus body, for example. The foreign material that has fallen along the conveying path 14 falls into the foreign material collector 13 and is thus collected.

A conveying portion 15 adjusts the conveying speed of the banknotes P such that the space between banknotes is a given space, and conveys the banknotes P to the banknote inspection device 100. The banknote inspection device 100 reads an image of each banknote P, and detects the kind of that banknote P, the orientations of the front and back faces of the banknote P, and an abnormality (tear, fold, stain etc.) of the banknote P.

If an abnormality of the banknote P is detected, the sheet processing apparatus 10 conveys the banknote P along a conveying path 17, sorts and stacks the banknote P into a rejecter 18a or 18b, depending on the type of the abnormality. On the other hand, if no abnormality of the banknote P is detected, the sheet processing apparatus 10 conveys the banknote P along the conveying path 17, and sorts and stacks the banknote P into one of stackers 19a to 19d, depending on the kind of the banknote P. This concludes the processing for sorting the banknotes.

Next, processing for aligning the banknotes will be described. The aligning processing is processing for equally setting the position and the front and back faces of the banknotes P, and stacking the banknotes P by kind. The alignment device 30 is provided between the sheet processing apparatus 10 and the sealing device 60. The alignment device 30 includes a conveying path 31, an alignment portion 32, a reversing portion 34, a conveying path 35, and a plurality of stackers 36a to 36d.

The banknotes P conveyed from the sheet processing apparatus 10 are conveyed along the conveying path 31. The alignment portion 32 aligns the banknotes P. For example, the alignment portion 32 matches the center of each banknote P with a given reference position in a direction perpendicular to the conveyance direction of the banknotes P. The alignment portion 32 also corrects the orientation of a skewed banknote P so as to cause the leading end portion of that banknote P to be perpendicular to the conveyance direction. "Skew" refers to the orientation of a banknote P shifting from the conveyance direction.

The reversing portion 34 is provided downstream of the alignment portion 32, and reverses the orientations of the front and back faces of the banknotes P. The conveying path 35 guides the banknotes P to the reversing portion 34. When processing for aligning the banknotes P is performed, the orientations of the front and back faces of the banknotes P need to be uniformly set. For this reason, the banknote inspection device 100 reads an image of each banknote P to detect the front and back faces of the banknote P, and transmits the detection result to the alignment device 30. The alignment device 30 determines whether to use the reversing portion 34 to reverse the front and back faces of the banknote P, in accordance with the result of the banknote inspection device 100 detecting the front and back faces.

In the case of not reversing the front and back faces of the banknote P, the alignment device 30 conveys the banknote P along the conveying path 31, and sorts and stacks the banknote P into one of the stackers 36a to 36d in accordance with the kind of the banknote P. On the other hand, in the case of reversing the front and back faces of the banknote P, the alignment device 30 conveys the banknote P along the conveying path 35. The reversing portion 34 includes a twist-conveying path, and reverses the front and back faces of the banknote P while conveying the banknote P. Thereafter, the alignment device 30 conveys the banknote P whose front and back faces have been reversed by the reversing portion 34, and sorts and stacks the banknote P into one of the stackers 36a to 36d in accordance with the kind of the banknote P. This concludes the processing for aligning the banknotes.

Note that the alignment device 30 may also return any banknotes P whose orientation has been adjusted to the sheet processing apparatus 10, and sort and stack those banknotes P into one of the stackers 19a to 19d. The stackers 36a to 36d in the alignment device 30 may also be used as rejecters for stacking banknotes P on which an abnormality has been detected.

Next, processing for sealing the banknotes will be described. The sealing processing is processing for putting a band around a bundle of a given number of banknotes P. The sealing device 60 includes a conveying path 62, a first stacker 64a, a second stacker 64b, a conveyor tray 66, a sealing device 68, and a discharge device 69. The conveying path 62 is connected to the conveying path 31 in the alignment device 30. A given number of banknotes P are stacked in the first stacker 64a and the second stacker 64b. The conveyor tray 66 conveys bundles of banknotes P. The sealing device 68 seals each bundle of banknotes P with a band. The second stacker 64b is arranged while being shifted from the first stacker 64a in an obliquely downward direction, and the sealing device 68 is arranged below the second stacker 64b. Furthermore, the discharge device 69, which receives bundles of banknotes P that have been sealed by the sealing device 68 such that the received bundles of banknotes P are stacked in the discharge device 69, is provided below the sealing device 68.

The sealing device 60 conveys the banknotes P to either the first stacker 64a or the second stacker 64b in accordance with the kind of the banknotes P that have been conveyed from the alignment device 30. A given number of (e.g. 100) conveyed banknotes P can be stacked in the first stacker 64a and the second stacker 64b.

The conveyor tray 66 is provided so as to be able to move in the directions of double arrows in FIG. 1. Upon the given number of banknotes P being stacked in the first stacker 64a, the conveyor tray 66 moves to the position of the first stacker 64a and receives the bundle of banknotes P. Upon the given number of banknotes P being stacked in the second stacker 64b, the conveyor tray 66 moves to the position of the second stacker 64b and receives the bundle of banknotes P.

After receiving the bundle of banknotes P, the conveyor tray 66 lowers to the position of the sealing device 68 and delivers the bundle of banknotes P to the sealing device 68. The sealing device 68 puts a band around the bundle of banknotes P received from the conveyor tray 66. The sealing device 68 also prints certain information on the band of the bundle of banknotes P. The information printed on the band is date and time, a serial number, a bank logo, or the like, for example. This information is printed using an inkjet printer, a dot printer, a laser printer, or the like, for example.

After finishing the printing on the band, the sealing device 68 discharges the bundle of banknotes P to the discharge device 69. Note that the sealing device 68 discharges bundles of banknotes P to different positions depending on the kind of the banknotes P. This concludes the processing for sealing the banknotes.

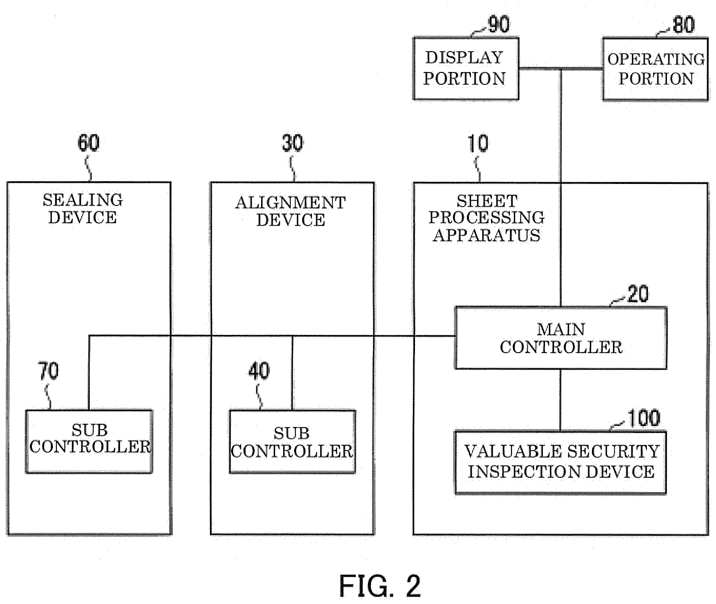

FIG. 2 is a block diagram showing a control configuration of the sheet processing system according to this embodiment. The sheet processing apparatus 10 is provided with a main controller 20 for controlling the operation of the overall sheet processing system 1. Although not shown in the diagram, the main controller 20 includes a CPU (Central Processing Unit) for controlling the operation of the sheet processing apparatus 10, the alignment device 30, and the sealing device 60, and a memory for storing a control program, management information, or the like.

The main controller 20 is connected to the banknote inspection device 100 and transmits and receives various kinds of information thereto and therefrom. Although not shown in the diagram, various sensors and motors in the sheet processing apparatus 10 are connected to the main controller 20, and the main controller 20 controls the operation of conveying the banknotes P in the sheet processing apparatus 10, for example.

An operating portion 80 with which an operator can input various kinds of information is connected to the main controller 20. A display portion 90 for displaying the information input by the operator, operating status of the sheet processing system 1, and the like is also connected to the main controller 20.

The alignment device 30 has a sub controller 40 for controlling the operation of the alignment device 30. The sealing device 60 has a sub controller 70 for controlling the operation of the sealing device 60. The sub controller 40 and the sub controller 70 are connected to the main controller 20 in the sheet processing apparatus 10 via a LAN cable, for example. The main controller 20 transmits an operation instruction for the alignment device 30 to the sub controller 40, and transmits an operation instruction for the sealing device 60 to the sub controller 70.

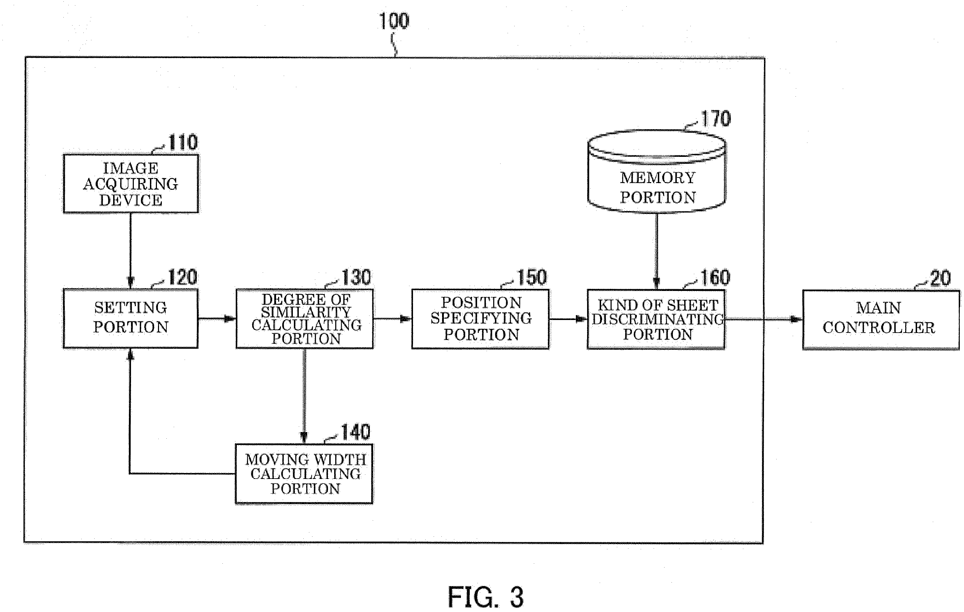

FIG. 3 is a block diagram showing a control configuration of the banknote inspection device 100 according to this embodiment. FIG. 3 shows a control configuration with which the banknote inspection device 100 discriminates the kinds of the banknotes P. The banknote inspection device 100 includes an image acquiring device 110, a setting portion 120, a degree of similarity calculating portion 130, a moving width calculating portion 140, a position specifying portion 150, a kind of sheet discriminating portion 160, and a memory portion 170.

The image acquiring device 110 contains a line sensor that includes a light-emitting portion such as an LED (Light Emitting Diode) and a photoelectric conversion device such as a CCD (Charge Coupled Device) or a CMOS (Complementary Metal Oxide Semiconductor), for example. The memory portion 170 is a storage device such as a HDD (Hard Disk Drive), an SSD (Solid State Drive), or a flash memory, for example.

The setting portion 120, the degree of similarity calculating portion 130, the moving width calculating portion 140, the position specifying portion 150, and the kind of sheet discriminating portion 160 may be realized with a processor such as a CPU executing a program stored in a program memory. Note that these functional portions 120 to 160 may also be realized by hardware such as an LSI (Large Scale Integration) or an ASIC (Application Specific Integrated Circuit) having a similar function to the processor executing the program.

The image acquiring device 110 reads a banknote P that is passing through the banknote inspection device 100, and acquires a banknote image 50 (sheet image), which is an image of the banknote P. The image acquiring device 110 outputs the acquired banknote image 50 to the setting portion 120, and stores the banknote image 50 in a memory (not shown). The setting portion 120 sets the position and the size of a reference area for the banknote image 50 that is input from the image acquiring device 110.

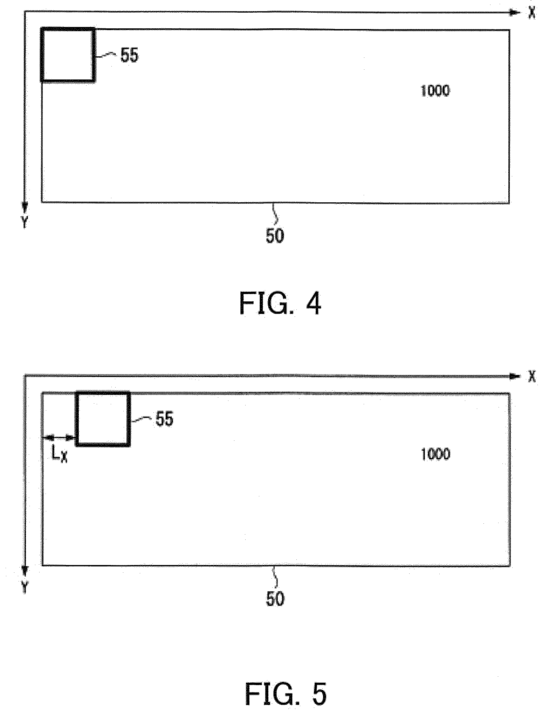

FIG. 4 is a diagram showing an exemplary starting position of the reference area according to this embodiment.

In FIG. 4, the longitudinal direction of the banknote image 50 is the X direction, and the short direction (direction of the shorter side) of the banknote image 50 is the Y direction. The setting portion 120 sets the starting position of the reference area 55 at an upper left corner, but may alternatively set the starting position of the reference area 55 to another position. The setting portion 120 outputs the set position and size of the reference area 55 to the degree of similarity calculating portion 130.

The degree of similarity calculating portion 130 acquires an image in the reference area 55 based on the position and the size of the reference area 55 input from the setting portion 120. The degree of similarity calculating portion 130 also extracts features from the acquired image in the reference area 55, and calculates a degree of similarity S between the extracted features and a typical banknote pattern. Examples of typical banknote patterns include characters indicating the amount (1000, 5000, 10000, one thousand yen, five thousand yen, ten thousand yen etc.). In FIG. 4, "1000", which is an example of the characters indicating the amount, is included in the banknote image 50.

The degree of similarity calculating portion 130 may calculate a correlation value as the degree of similarity S, for example. The correlation value is calculated as a real number value from 0 to 1. A correlation value that is closer to 1 indicates a higher likelihood that the typical pattern (e.g. characters indicating the amount) is present in the reference area 55. The degree of similarity calculating portion 130 outputs the calculated degree of similarity S to the moving width calculating portion 140. The degree of similarity calculating portion 130 also stores the degree of similarity S in the memory (not shown) in association with information regarding the position of the reference area 55 (position in the X direction and position in the Y direction).

Note that the degree of similarity calculating portion 130 may calculate, as the degree of similarity S, a value output from an output layer in a neural network or a deep learning machine. The degree of similarity calculating portion 130 may also calculate, as the degree of similarity S, an output value of an objective function in a support vector machine.

The moving width calculating portion 140 calculates a moving width Lx of the reference area 55 in the X direction based on the degree of similarity S input from the degree of similarity calculating portion 130. The moving width calculating portion 140 outputs the calculated moving width Lx of the reference area 55 in the X direction to the setting portion 120.

The moving width calculating portion 140 makes the moving width Lx of the reference area 55 smaller the higher the degree of similarity S is (i.e. the greater the similarity is), and makes the moving width Lx of the reference area 55 larger the lower the degree of similarity S is (i.e. the smaller the similarity is). Specifically, the moving width calculating portion 140 calculates the moving width Lx based on Equation (1) below. Here, $k1$, $a1$, and $c1$ are constants.

$$Lx = k1/(S+a1) + c1 \quad ...\text{Equation (1)}$$

Note that the moving width calculating portion 140 may also calculate an amount of change $\Delta Lx$ in the moving width Lx of the reference area 55 based on the degree of similarity S input from the degree of similarity calculating portion 130. Specifically, the moving width calculating portion 140 may calculate the amount of change $\Delta Lx$ in the moving width Lx based on Equation (2) below, and calculate the moving width Lx based on Equation (3). Here, $k2$, $a2$, and $c2$ are constants. ":=" indicates an assignment expression. In other words, the variable on the left side of the expression is assigned (updated) to the value of the right side of the expression.

$$\Delta Lx = k2/(S+a2) + c2 \quad ...\text{Equation (2)}$$

$$Lx := Lx + \Delta Lx \quad ...\text{Equation (3)}$$

Note that the method with which the moving width calculating portion 140 calculates the moving width Lx is not limited to the above methods. For example, the moving width calculating portion 140 may also calculate the moving width Lx based on a degree of similarity $S(t-p)$ at time $t-p$ to a degree of similarity $S(t)$ at current time $t$ that are input from the degree of similarity calculating portion 130. Specifically, the moving width calculating portion 140 may calculate the moving width Lx based on Equation (4) below. Here, $p$, $a3$, and $c3$ are constants. Note that, when $t<p$, the moving width calculating portion 140 calculates the moving width Lx based on all degrees of similarity that are input from the degree of similarity calculating portion 130.

[Math 1]

$$L_x = k_3 / \left( \sum_{e=t-p}^{t} S(e) + a_3 \right) + C_3 \quad ...\text{Equation (4)}$$

The moving width calculating portion 140 may also prepare in advance, as a parameter, a table in which degrees of similarity S are associated with moving widths Lx in one-to-one correspondence, and derive the moving width Lx based on the degree of similarity S.

FIG. 5 is a diagram showing an example of a state in which the reference area has been moved in the X direction according to this embodiment. As shown in FIG. 5, the setting portion 120 moves the position of the reference area 55 in the X direction based on the moving width Lx input from the moving width calculating portion 140. The setting portion 120 then outputs the post-movement position and size of the reference area 55 to the degree of similarity calculating portion 130.

The degree of similarity calculating portion 130 acquires an image in the reference area 55 based on the position and the size of the reference area 55 input from the setting portion 120. The degree of similarity calculating portion 130 extracts features from the acquired image in the reference area 55, and calculates a degree of similarity S between the extracted features and the typical banknote pattern (e.g. characters indicating the amount). The degree of similarity calculating portion 130 outputs the calculated degree of similarity S to the moving width calculating portion 140. The degree of similarity calculating portion 130 also stores the degree of similarity S in the memory (not shown) in association with information regarding the position of the reference area 55 (position in the X direction and position in the Y direction).

The moving width calculating portion 140 calculates the moving width Lx of the reference area 55 in the X direction based on the degree of similarity S input from the degree of similarity calculating portion 130 by using the aforementioned method. The moving width calculating portion 140 outputs the calculated moving width Lx of the reference area 55 in the X direction to the setting portion 120. The banknote inspection device 100 repeats the above processing until the reference area 55 reaches the end position in the X direction (right end of the banknote image 50).

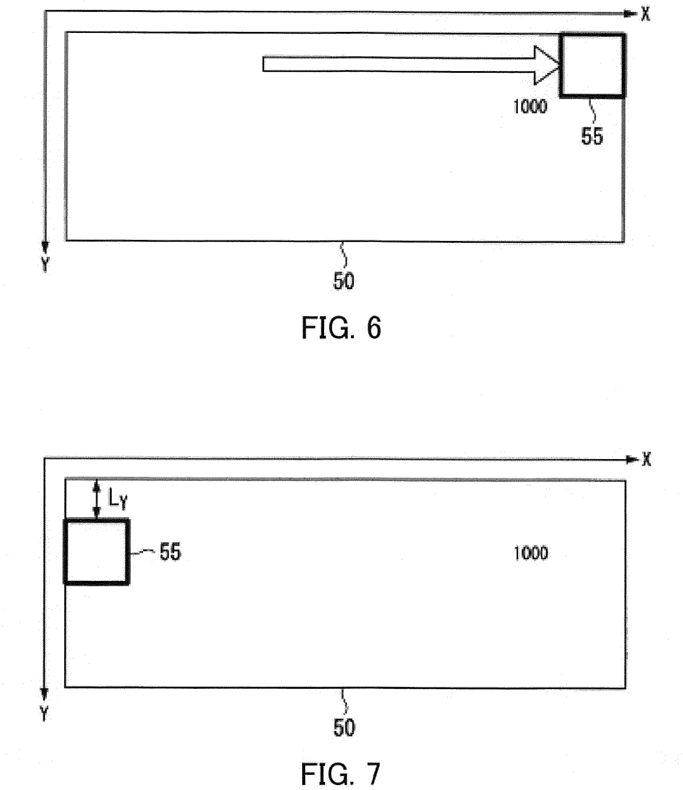

FIG. 6 is a diagram showing an example of a state in which the reference area has reached the end position of the banknote image in the X direction according to this embodiment. As shown in FIG. 6, upon the reference area 55 reaching the end position in the X direction, the degree of similarity calculating portion 130 outputs, to the moving width calculating portion 140, a plurality of degrees of similarity S for a row from the starting position (left end) to the end position (right end).

The moving width calculating portion 140 calculates a moving width Ly of the reference area 55 in the Y direction based on the plurality of degrees of similarity S for a row from the starting position (left end) to the end position (right end) input from the degree of similarity calculating portion 130. The moving width calculating portion 140 outputs the calculated moving width Ly of the reference area 55 in the Y direction to the setting portion 120.

For example, the moving width calculating portion 140 acquires the maximum value Max of the plurality of degrees of similarity S for a row from the starting position (left end) to the end position (right end), and calculates the moving width Ly based on the acquired maximum value Max.

The moving width calculating portion 140 makes the moving width Ly of the reference area 55 smaller the larger the maximum value Max of the degrees of similarity S is, and makes the moving width Ly of the reference area 55 larger the smaller the maximum value Max of the degrees of similarity S is. Specifically, the moving width calculating portion 140 may calculate the moving width Ly based on Equation (5) below. Here, k3, a3, and c3 are constants.

$$Ly = k3/(Max + a3) + c3 \quad ...\text{Equation (5)}$$

Note that the moving width calculating portion 140 may also calculate an amount of change $\Delta$Ly in the moving width Ly of the reference area 55 based on the maximum value Max of the calculated degrees of similarity S. Specifically, the moving width calculating portion 140 may calculate the amount of change $\Delta$Ly in the moving width Ly based on Equation (6) below, and may calculate the moving width Ly based on Equation (7). Here, k4, a4, and c4 are constants. ":=" indicates an assignment expression.

$$\Delta Ly = k4/(Max + a4) + c4 \quad ...\text{Equation (6)}$$

$$Ly := Ly + \Delta Ly \quad ...\text{Equation (7)}$$

Note that the method with which the moving width calculating portion 140 calculates the moving width Ly is not limited to the above methods. For example, the moving width calculating portion 140 may prepare in advance, as a parameter, a table in which maximum values Max of the degrees of similarity S are associated with moving widths Ly in one-to-one correspondence, and derive the moving width Ly based on the maximum value Max of the degrees of similarity S. The moving width calculating portion 140 may also calculate the moving width Ly based on the gradient (amount of change) of the maximum value Max of the degrees of similarity S. Instead of using the maximum value Max, the moving width calculating portion 140 may also calculate the moving width Ly based on the average value Ave of the plurality of degrees of similarity S for a row from the starting position (left end) to the end position (right end). In this case, the moving width calculating portion 140 may calculate the moving width Ly by replacing "Max" in Equations (5) and (6) with "Ave".

In this embodiment, the setting portion 120 moves the reference area 55 with the longitudinal direction of the banknote P as the X direction, and moves the reference area 55 with the short direction of the banknote P as the Y direction. When the longitudinal direction is used as the X direction, a large number of degrees of similarity S can be used in calculating the moving width Ly in the Y direction. Accordingly, the moving width calculating portion 140 can more appropriately calculate the moving width Ly in the Y direction.

FIG. 7 is a diagram showing an example of a state in which the reference area has been moved in the Y direction according to this embodiment. As shown in FIG. 7, the setting portion 120 moves the position of the reference area 55 in the Y direction based on the moving width Ly input from the moving width calculating portion 140. The setting portion 120 then outputs the post-movement position and size of the reference area 55 to the degree of similarity calculating portion 130.

The degree of similarity calculating portion 130 acquires an image in the reference area 55 based on the position and the size of the reference area 55 input from the setting portion 120. The degree of similarity calculating portion 130 also extracts features from the acquired image in the reference area 55, and calculates a degree of similarity S between the extracted features and the typical banknote pattern (e.g. characters indicating the amount). The degree of similarity calculating portion 130 outputs the calculated degree of similarity S to the moving width calculating portion 140. The degree of similarity calculating portion 130 also stores the degree of similarity S in the memory (not shown) in association with information regarding the position of the reference area 55 (position in the X direction and position in the Y direction).

The moving width calculating portion 140 calculates a moving width Lx of the reference area 55 in the X direction based on the degree of similarity S input from the degree of similarity calculating portion 130 by using the aforementioned method. The moving width calculating portion 140 outputs the calculated moving width Lx of the reference area 55 in the X direction to the setting portion 120. The banknote inspection device 100 repeats the above processing.

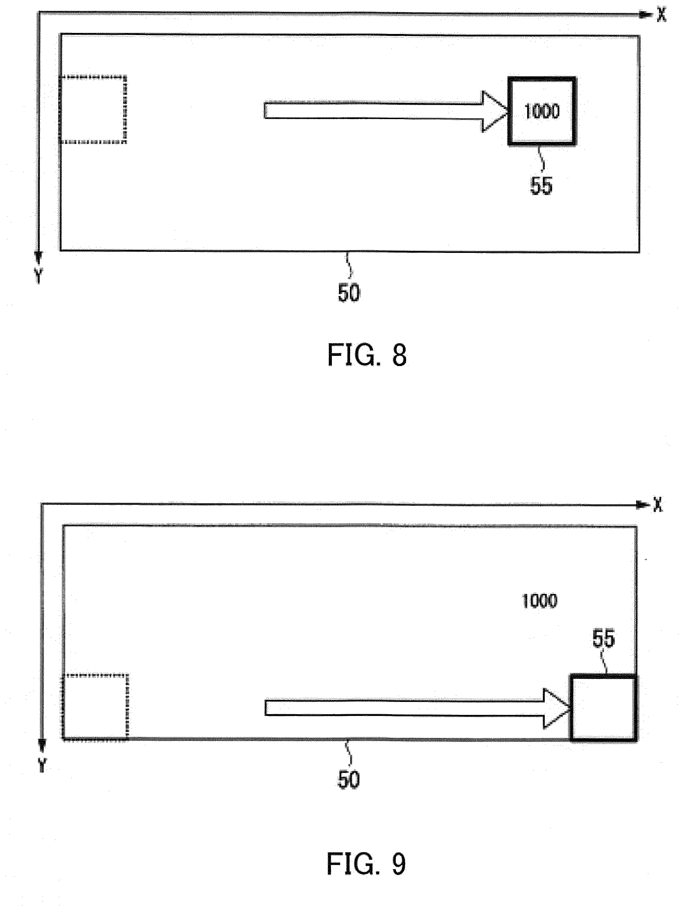

FIG. 8 is a diagram showing an example of a state in which the reference area has reached a position at which the maximum degree of similarity S is obtained according to this embodiment. As shown in FIG. 8, the image in the reference area 55 contains characters (1000) indicating the amount. In this case, the degree of similarity S calculated by the degree of similarity calculating portion 130 takes on its maximum value.

The banknote inspection device 100 repeats calculation of the degree of similarity S while moving the reference area 55 in the X direction and the Y direction until the reference area 55 reaches a final position in the banknote image 50 (lower right corner of the banknote image 50). Note that, although the reference area 55 is moved from the upper left corner to the lower right corner of the banknote image 50 in this embodiment, the moving route is not limited thereto as long as the reference area 55 can move throughout the entire surface of the banknote image 50.

FIG. 9 is a diagram showing an example of a state in which the reference area has reached the final position according to this embodiment. As shown in FIG. 9, upon the reference area 55 reaching the final position of the banknote image 50 (lower right corner of the banknote image 50), the degree of similarity calculating portion 130 outputs, to the position specifying portion 150, all of the calculated degrees of similarity S in association with the information regarding the position (position in the X direction and position in the Y direction) of the reference area 55 at which the degrees of similarity S have been calculated.

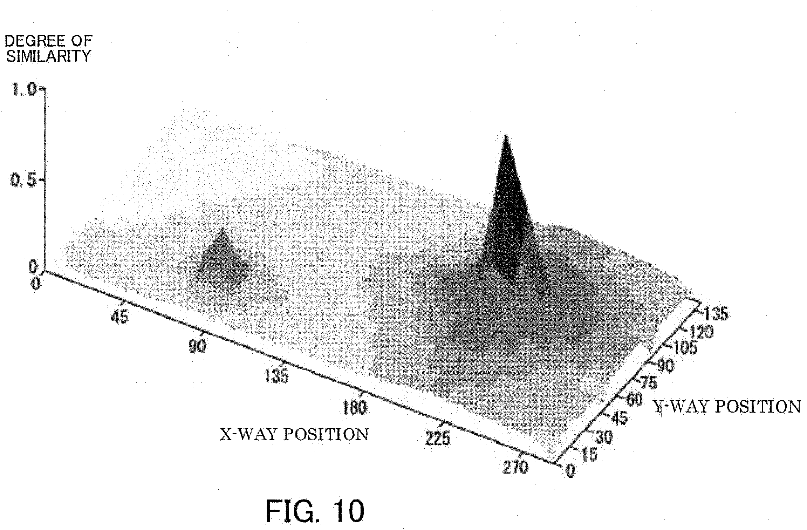

FIG. 10 is a diagram showing an exemplary distribution of the degrees of similarity in the banknote image according to this embodiment. In FIG. 10, the X axis indicates the position of the reference area 55 in the X direction, the Y axis indicates the position of the reference area 55 in the Y direction, and the Z axis indicates the degree of similarity S. The position specifying portion 150 specifies an area that includes the reference area 55 in which the maximum value of the plurality of degrees of similarity S calculated by the degree of similarity calculating portion 130 is obtained, as a position at which the typical banknote pattern (e.g. characters indicating the amount) is present.

For example, the position specifying portion 150 specifies an area in which the number of degrees of similarity S having values greater than or equal to a preset threshold value is greater than or equal to a given number, as a position at which the typical banknote pattern is present, based on the degrees of similarity S input from the degree of similarity calculating portion 130 and the position information (position in the X direction and position in the Y direction).

Note that the position specifying portion 150 may specify a position at which the typical banknote pattern is present, based on the position of the reference area 55 at which the maximum degree of similarity S is obtained (peak position of the degrees of similarity S in FIG. 10). Alternatively, the position specifying portion 150 may calculate the total Ssum of the degrees of similarity S in a predetermined area from the position of the reference area 55, and specify a position at which the typical banknote pattern is present, based on the position of the reference area 55 at which the calculate Ssum is largest.

The position specifying portion 150 outputs the position information indicating the specified position to the kind of sheet discriminating portion 160. A plurality of images that correspond to respective kinds of sheets and indicate typical banknote patterns are stored in the memory portion 170, and the kind of sheet discriminating portion 160 reads out these images from the memory portion 170.

The kind of sheet discriminating portion 160 reads out the banknote image 50 from the memory (not shown), and acquires the image at the position specified by the position specifying portion 150 based on the position information input from the position specifying portion 150. The kind of sheet discriminating portion 160 discriminates the kind of the banknote P by comparing the image at the position specified by the position specifying portion 150 with each of the plurality of images stored in the memory portion 170. For example, the kind of sheet discriminating portion 160 performs pattern matching, thereby specifying the image that is most similar to the image at the position specified by the position specifying portion 150 from among the plurality of images read out from the memory portion 170. The kind of sheet discriminating portion 160 discriminates the kind corresponding to the specified image as the kind of the banknote P. The kind of sheet discriminating portion 160 outputs kind information indicating the discriminated kind of the banknote P to the main controller 20.

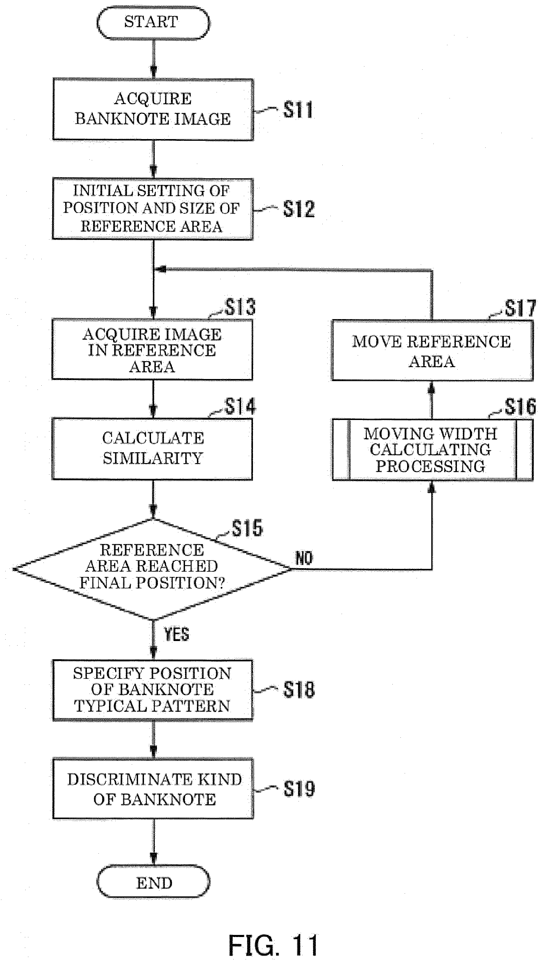

FIG. 11 is a flowchart showing processing for determining the kind of a banknote according to this embodiment. Initially, the image acquiring device 110 reads a banknote P that is passing through the banknote inspection device 100, and acquires the banknote image 50 (S11). The setting portion 120 configures an initial setting of the position and the size of the reference area 55 for the banknote image 50 acquired by the image acquiring device 110 (S12).

Next, the degree of similarity calculating portion 130 acquires an image in the reference area 55 in the banknote image 50 based on the position and the size of the reference area 55 set by the setting portion 120 (S13). The degree of similarity calculating portion 130 extracts features from the acquired image in the reference area 55, and calculates the degree of similarity S between the extracted features and the typical banknote pattern (e.g. characters indicating the amount) (S14).

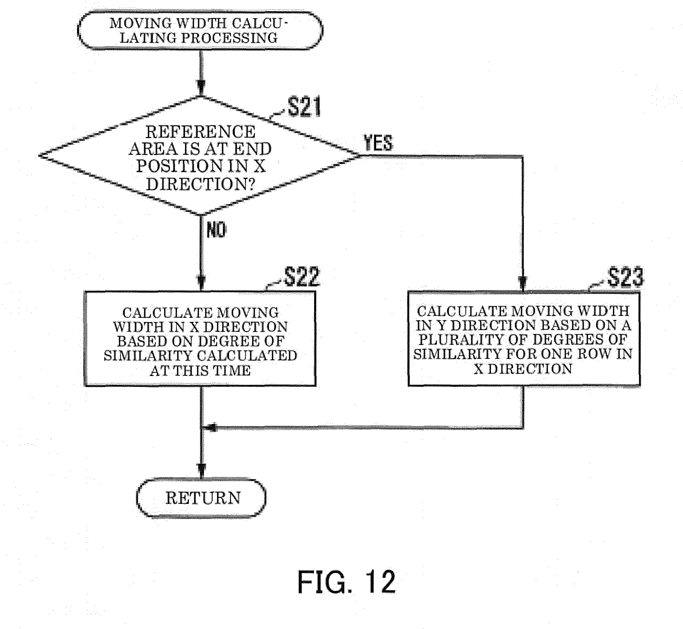

Thereafter, the banknote inspection device 100 determines whether the reference area 55 has reached the final position (see FIG. 9) (S15). If the banknote inspection device 100 determines that the reference area 55 has not reached the final position, the banknote inspection device 100 performs moving width calculating processing, which will be described later using FIG. 12 (S16). In the moving width calculating processing, the moving width calculating portion 140 calculates the moving width of the reference area 55 based on the degree of similarity S calculated by the degree of similarity calculating portion 130. Thereafter, the setting portion 120 moves the reference area 55 based on the moving width calculated by the moving width calculating portion 140 (S17), and the processing returns to the aforementioned step S13.

On the other hand, if, in step S15, the banknote inspection device 100 determines that the reference area 55 has reached the final position, the position specifying portion 150 specifies the position at which the typical banknote pattern is present in the banknote image 50, based on the plurality of degrees of similarity S calculated by the degree of similarity calculating portion 130, and the position information (position in the X direction and position in the Y direction) (S18).

Thereafter, the kind of sheet discriminating portion 160 references the plurality of images indicating the typical banknote pattern stored in the memory portion 170, and discriminates the kind of the banknote P by performing pattern matching on the image at the position specified by the position specifying portion 150 (S19). The kind of sheet discriminating portion 160 outputs the kind information indicating the discriminated kind to the main controller 20, and the processing of this flowchart ends.

FIG. 12 is a flowchart showing the moving width calculating processing in step S16 shown in FIG. 11. Initially, the moving width calculating portion 140 determines whether the reference area 55 has reached the end position in the X direction (right end of the banknote image 50) (S21).

If the moving width calculating portion 140 determines that the reference area 55 has not reached the end position in the X direction (right end of the banknote image 50), the moving width calculating portion 140 calculates the moving width Lx in the X direction based on the degree of similarity S that is calculated at this time (S22). For example, the moving width calculating portion 140 calculates the moving width Lx based on the aforementioned Equation (1). Note that the moving width calculating portion 140 may also calculate the amount of change $\Delta$Lx in the moving width Lx based on the aforementioned Equation (2), and calculate the moving width Lx based on Equation (3). Also, the moving width calculating portion 140 may calculate the moving width Lx based on the aforementioned Equation (4). The moving width calculating portion 140 outputs the calculated moving width Lx to the setting portion 120, and the processing proceeds to the aforementioned step S17 (FIG. 11).

On the other hand, if, in step S21, the moving width calculating portion 140 determines that the reference area 55 has reached the end position in the X direction (right end of the banknote image 50), the moving width calculating portion 140 calculates the moving width Ly in the Y direction based on the plurality of degrees of similarity for a row in the X direction (S23). For example, the moving width calculating portion 140 acquires the maximum value Max of the plurality of degrees of similarity S for a row in the X direction, and calculates the moving width Ly based on the aforementioned Equation (5). Note that the moving width calculating portion 140 may calculate the amount of change ΔLy in the moving width Ly based on the aforementioned Equation (6), and calculate the moving width Ly based on Equation (7). Also, the moving width calculating portion 140 may calculate the moving width Ly based on the average value Ave, rather than the maximum value Max, of the plurality of degrees of similarity S for a row in the X direction. The moving width calculating portion 140 outputs the calculated moving width Ly to the setting portion 120, and the processing proceeds to the aforementioned step S17 (FIG. 11).

Thus, the moving width calculating portion 140 calculates the moving width Lx in the X direction and the moving width Ly in the Y direction, which intersects the X direction, in the banknote image 50 based on the degrees of similarity S calculated by the degree of similarity calculating portion 130. As a result, the sheet processing apparatus 10 according the embodiment can accurately discriminate the kind of the banknote P in a short time.

Note that the sheet processing apparatus 10 according to the above embodiment may also include a computer. The process of the processing in the sheet processing apparatus 10 may be stored in a computer-readable recording medium in the form of a program, and the above processing may be performed as a result of the computer reading out and executing this program. Here, the computer-readable recording medium refers to a magnetic disk, a magneto-optic disk, a CD-ROM, a DVD-ROM, a semiconductor memory, or the like. This computer program may be distributed to the computer through a communication line, and the computer that has received the distributed program may execute this program.

In the above embodiment, the moving width calculating portion 140 may calculate the moving width Lx based on the gradient (amount of change) between a pre-movement degree of similarity S and the current degree of similarity S. If the gradient takes a negative value, the moving width calculating portion 140 may move back the reference area 55 relative to the moving direction. Thus, the position specifying portion 150 can more accurately specify the position at which the typical banknote pattern is present.

In the above embodiment, it is assumed that the reference area 55 is a rectangular area. However, this need not be the case. For example, the reference area 55 may also be a circular area, an elliptic area, or a polygonal area other than a rectangle.

In the above embodiment, if the reference area 55 has reached the end position in the X direction (right end), the setting portion 120 returns the reference area 55 to the starting position (left end), and thereafter moves the reference area 55 in the Y direction by the moving width Ly. However, the moving direction of the reference area 55 is not limited thereto. For example, when the reference area 55 has reached the end position (right end) in the X direction, the setting portion 120 may move the reference area 55 in the Y direction by the moving width Ly, and then move the reference area 55 in a direction opposite to the X direction (-X direction).

In the above embodiment, the sheets P are not limited to banknotes, and may be any sheets with a printed pattern. For example, the sheets P may be postal matters with a printed amount or the like. The typical image of the sheets P is not limited to characters indicating the amount, and may be a portrait, an emblem, a symbol, a signature, a stamp, a pattern on a back face of a banknote, or the like, for example.

According to the above-described embodiment, the sheet processing apparatus 10 includes the image acquiring device 110, the setting portion 120, the degree of similarity calculating portion 130, the moving width calculating portion 140, the position specifying portion 150, and the kind of sheet discriminating portion 160. The image acquiring device 110 acquires the banknote image 50. The setting portion 120 sets the reference area 55 for the banknote image 50 acquired by the image acquiring device 110. The setting portion 120 repeats moving the reference area 55 from the starting position to the end position in the X direction by the moving width Lx, and, upon the reference area 55 reaching the end position, moving the reference area 55 in the Y direction by the moving width Ly. The degree of similarity calculating portion 130 extracts features from the image in the reference area 55 set by the setting portion 120, and calculates the degree of similarity S between the extracted features and the typical banknote pattern. The moving width calculating portion 140 calculates the moving width Lx and/or the moving width Ly based on the degree of similarity S calculated by the degree of similarity calculating portion 130. The position specifying portion 150 specifies the position at which the typical banknote pattern is present in the banknote image 50 based on the plurality of degrees of similarity S calculated by the degree of similarity calculating portion 130. The kind of sheet discriminating portion 160 discriminates the kind of the banknote P based on the banknote image 50 at the position specified by the position specifying portion 150. As a result, the sheet processing apparatus 10 according the embodiment can accurately discriminate the kind of the banknote P in a short time.

The above embodiment can be expressed as follows.

A sheet processing apparatus including:

an image acquiring device configured to acquire a sheet image that is an image on a sheet;

a setting portion configured to set a reference area in the sheet image acquired by the image acquiring device, wherein the setting portion repeats moving the reference area from a starting position to an end position in a first direction by a first moving width, and, upon the reference area reaching the end position, moving the reference area in a second direction intersecting the first direction by a second moving width;

a degree of similarity calculating portion configured to extract a feature from an image in the reference area set by the setting portion, and calculate a degree of similarity between the extracted feature and a typical sheet pattern;

a moving width calculating portion configured to calculate the first moving width and/or the second moving width based on the degree of similarity calculated by the degree of similarity calculating portion;

a position specifying portion configured to specify a position at which the typical sheet pattern is present in the sheet image based on a plurality of the degrees of similarity calculated by the degree of similarity calculating portion; and

a kind of sheet discriminating portion configured to discriminate a kind of the sheet based on the sheet image at the position specified by the position specifying portion.

Although an embodiment of the present invention has been described, this embodiment is proposed as an example, and is not intended to limit the scope of the invention. This embodiment can be carried out in various other modes. Omission, replacement, and modification can be made in various forms without departing from the gist of the invention. The embodiment and modifications thereof are encompassed in the scope and the gist of the invention, and are also encompassed in the invention described in the claims and the equivalents thereof.

**Claims**

1. A sheet processing apparatus comprising:

   an image acquiring device (110) configured to acquire a sheet image that is an image on a sheet (P);

   a setting portion (120) configured to set a reference area (55) in the sheet image acquired by the image acquiring device (110), wherein the setting portion (120) repeats moving the reference area (55) from a starting position to an end position in a first direction by a first moving width (Lx), and, upon the reference area (55) reaching the end position, moving the reference area (55) in a second direction intersecting the first direction by a second moving width (Ly);

   a degree of similarity calculating portion (130) configured to extract a feature from an image in the reference area (55) set by the setting portion (120), and calculate a degree of similarity between the extracted feature and a typical sheet pattern;

   a moving width calculating portion (140) configured to calculate the first moving width (Lx) and/or the second moving width (Ly) based on the degree of similarity calculated by the degree of similarity calculating portion (130);

   a position specifying portion (150) configured to specify a position at which the typical pattern of sheets is present in the sheet image based on a plurality of the degrees of similarity calculated by the degree of similarity calculating portion (130); and

   a kind of sheet discriminating portion (160) configured to discriminate a kind of the sheet (P) based on the sheet image at the position specified by the position specifying portion (150).

2. The apparatus according to claim 1,
   wherein, upon the reference area (55) reaching the end position in the first direction, the setting portion (120) returns the reference area (55) to the starting position, and thereafter moves the reference area (55) in the second direction by the second moving width (Ly).

3. The apparatus according to claim 1 or 2,
   wherein the moving width calculating portion (140) calculates the second moving width (Ly) based on a maximum value of the plurality of degrees of similarity calculated by the degree of similarity calculating portion (130) for a row from the starting position to the end position.

4. The apparatus according to claim 1 or 2,
   wherein the moving width calculating portion (140) calculates the second moving width (Ly) based on an average value of the plurality of degrees of similarity calculated by the degree of similarity calculating portion (130) for a row from the starting position to the end position.

5. The apparatus according to any one of claims 1 to 4,

wherein the position specifying portion (150) specifies an area including the reference area (55) in which the maximum value of the plurality of degrees of similarity calculated by the degree of similarity calculating portion (130) is calculated, as the position at which the typical sheet pattern is present.

6. The apparatus according to any one of claims 1 to 5, further comprising:

a memory portion (170) configured to store a plurality of images indicating typical sheet patterns and corresponding to a plurality of kinds of sheet in one-to-one correspondence,
wherein the kind of sheet discriminating portion (160) discriminates the kind of the sheet (P) by comparing the image at the position specified by the position specifying portion (150) with each of the plurality of images stored in the memory portion (170).

7. The apparatus according to any one of claims 1 to 6,
wherein the setting portion (120) moves the reference area (55) taking a longitudinal direction of the sheet as the first direction, and moves the reference area (55) taking a short direction of the sheet as the second direction.

8. A sheet processing method comprising:

acquiring a sheet image that is an image on a sheet;
setting a reference area in the acquired sheet image, wherein moving the reference area from a starting position to an end position in a first direction by a first moving width, and moving, upon the reference area reaching the end position, the reference area in a second direction intersecting the first direction by a second moving width are repeated;
extracting a feature from an image in the set reference area, and calculating a degree of similarity between the extracted feature and a typical sheet pattern;
calculating the first moving width and/or the second moving width based on the degree of similarity;
specifying a position at which the typical sheet pattern is present in the sheet image based on a plurality of the calculated degrees of similarity; and
discriminating a kind of the sheet based on the sheet image at the specified position.

9. The method according to claim 8,
wherein, in the setting step, upon the reference area reaching the end position in the first direction, the reference area is returned to the starting position, and thereafter, the reference area is moved in the second direction by the second moving width.

10. The method according to claim 8 or 9,
wherein, in the moving width calculating step, the second moving width is calculated based on a maximum value of the plurality of calculated degrees of similarity for a row from the starting position to the end position.

11. The method according to any one of claims 8 - 10,
wherein, in the moving width calculating step, the second moving width is calculated based on an average value of the plurality of calculated degrees of similarity for a row from the starting position to the end position.

12. The method according to any one of claims 8 - 11,
wherein, in the position specifying step, an area including the reference area in which the maximum value of the plurality of calculated degrees of similarity is calculated, is specified as the position at which the typical sheet pattern is present.

13. The method according to any one of claims 8 - 12, further comprising:

storing a plurality of images indicating the typical sheet pattern and corresponding to a plurality of kinds of sheet in one-to-one correspondence,
wherein, in the kind of sheet discriminating step, the kind of the sheet is discriminated by comparing the image at the position specified as a result of the specifying of the position, with each of the plurality of stored images.

14. The method according to any one of claims 8 - 13,
wherein, in the setting step, the reference area is moved taking a longitudinal direction of the sheet as the first direction, and the reference area is moved taking a short direction of the sheet as the second direction.

**15.** The apparatus according to any one of claims 1 to 6, wherein the apparatus is configured to execute a method of any one of claims 8 - 14.

FIG. 1

EP 3 214 578 A1

FIG. 2

EP 3 214 578 A1

FIG. 3

FIG. 4

FIG. 5

FIG. 6

FIG. 7

FIG. 8

FIG. 9

FIG. 10

START

ACQUIRE
BANKNOTE IMAGE ── S11

INITIAL SETTING OF
POSITION AND SIZE OF ── S12
REFERENCE AREA

ACQUIRE IMAGE
IN REFERENCE ── S13
AREA

MOVE REFERENCE
AREA ── S17

CALCULATE
SIMILARITY ── S14

MOVING WIDTH
CALCULATING ── S16
PROCESSING

REFERENCE
AREA REACHED ── S15    NO
FINAL POSITION?

YES

SPECIFY POSITION
OF BANKNOTE ── S18
TYPICAL PATTERN

DISCRIMINATE KIND
OF BANKNOTE ── S19

END

FIG. 11

20

MOVING WIDTH CALCU-
LATING PROCESSING

S21
REFERENCE
AREA IS AT END
POSITION IN X
DIRECTION?

YES

NO

S22
CALCULATE MOVING
WIDTH IN X DIRECTION
BASED ON DEGREE OF
SIMILARITY CALCULATED
AT THIS TIME

S23
CALCULATE MOVING WIDTH
IN Y DIRECTION BASED ON A
PLURALITY OF DEGREES OF
SIMILARITY FOR ONE ROW IN
X DIRECTION

RETURN

FIG. 12

Europäisches
Patentamt

European
Patent Office

Office européen
des brevets

# EUROPEAN SEARCH REPORT

Application Number

EP 17 15 6447

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 963 584 A1 (GLORY KOGYO KK [JP]) 6 January 2016 (2016-01-06) * abstract * * paragraphs [0002] - [0017] * ----- | 1-15 | INV. G06K9/20 G06K9/62 |
| A | ABDULLAH M MOUSSA ET AL: "FRoTeMa: Fast and Robust Template Matching", IJACSA) INTERNATIONAL JOURNAL OF ADVANCED COMPUTER SCIENCE AND APPLICATIONS, vol. 6, 31 December 2015 (2015-12-31), XP55388681, * the whole document * ----- | 1-15 | |
| A | US 2015/156484 A1 (TAKAHAMA ATSUSHI [JP]) 4 June 2015 (2015-06-04) * abstract * * paragraphs [0050] - [0055], [0068] * ----- | 1-15 | |
| A | EP 2 431 951 A2 (TOSHIBA KK [JP]) 21 March 2012 (2012-03-21) * abstract * * paragraphs [0007] - [0021] * ----- | 1-15 | TECHNICAL FIELDS SEARCHED (IPC)  G06K |

The present search report has been drawn up for all claims

| Place of search | Date of completion of the search | Examiner |
|---|---|---|
| The Hague | 7 July 2017 | Valencia, Erika |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 15 6447

This annex lists the patent family members relating to the patent documents cited in the above-mentioned European search report.
The members are as contained in the European Patent Office EDP file on
The European Patent Office is in no way liable for these particulars which are merely given for the purpose of information.

07-07-2017

| Patent document cited in search report | | Publication date | Patent family member(s) | | Publication date |
|---|---|---|---|---|---|
| EP 2963584 | A1 | 06-01-2016 | EP | 2963584 A1 | 06-01-2016 |
| | | | JP | 6139658 B2 | 31-05-2017 |
| | | | JP | WO2014132414 A1 | 02-02-2017 |
| | | | US | 2016012288 A1 | 14-01-2016 |
| | | | WO | 2014132414 A1 | 04-09-2014 |
| US 2015156484 | A1 | 04-06-2015 | JP | 2015106290 A | 08-06-2015 |
| | | | US | 2015156484 A1 | 04-06-2015 |
| EP 2431951 | A2 | 21-03-2012 | CN | 102402681 A | 04-04-2012 |
| | | | EP | 2431951 A2 | 21-03-2012 |
| | | | JP | 2012064039 A | 29-03-2012 |
| | | | US | 2012072012 A1 | 22-03-2012 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016040403 A